(19) Europäisches Patentamt / European Patent Office / Office européen des brevets

(11) **EP 4 109 607 A2**

(12) **EUROPEAN PATENT APPLICATION**

(43) Date of publication:
**28.12.2022 Bulletin 2022/52**

(21) Application number: **22180808.2**

(22) Date of filing: **23.06.2022**

(51) International Patent Classification (IPC):
**H01M 8/04089** (2016.01)    **H01M 8/0438** (2016.01)
**H01M 8/04746** (2016.01)

(52) Cooperative Patent Classification (CPC):
**H01M 8/04753; H01M 8/04097; H01M 8/04104;
H01M 8/04432**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**KH MA MD TN**<br><br>(30) Priority: **25.06.2021  US 202163215072 P**<br><br>(71) Applicants:<br>• **Cummins, Inc.**<br>  **Columbus, Indiana 47201 (US)**<br>• **Hydrogenics Corporation**<br>  **Mississauga, ON L5T 2N6 (CA)** | (72) Inventors:<br>• **Ancimer, Richard J.**<br>  **Toronto, M65 3R7 (CA)**<br>• **Teene, Eero**<br>  **Hamilton, L9C 3Y6 (CA)**<br>• **Forte, Paolo**<br>  **Maple, L6A 2S9 (CA)**<br>• **Tripathi, Sumit**<br>  **Columbus, 47201 (US)**<br><br>(74) Representative: **Pinnington, Giles Oliver<br>Marks & Clerk LLP<br>1 New York Street<br>Manchester M1 4HD (GB)** |

(54) **OPERATING SYSTEMS AND METHODS OF USING A PROPORTIONAL CONTROL VALVE IN A FUEL CELL SYSTEM**

(57)    The present disclosure relates to systems and methods of using a proportional control valve in a fuel cell stack system. The fuel cell stack system, may comprise a fuel cell stack including an anode with an anode inlet and an anode outlet, and a cathode with a cathode inlet and a cathode outlet, and a control valve, which controls the flow of a fuel into the anode. The flow of fuel may be based on a pressure differential measured across any two of the anode inlet, the anode outlet, the cathode inlet, and the cathode outlet.

*FIG. 1A*

**EP 4 109 607 A2**

**Description**

CROSS-REFERENCE TO RELATED APPLICATIONS

This nonprovisional application claims the benefit and priority, under 35 U.S.C. § 119(e) and any other applicable laws or statutes, to U.S. Provisional Patent Application Serial No. 63/215,072 filed on June 25, 2021, the entire disclosure of which is hereby expressly incorporated herein by reference.

TECHNICAL FIELD

The present disclosure relates to systems and methods of using a proportional control valve in a fuel cell or a fuel cell stack system.

BACKGROUND

Vehicles and/or powertrains use fuel cells or fuel cell stacks for their power needs. A fuel cell and/or fuel cell stack may include, but is not limited to a phosphoric acid fuel cell (PAFC), a molten carbonate fuel cell (MCFC), a proton exchange membrane fuel cell, also called a polymer exchange membrane fuel cell (PEMFC), or a solid oxide fuel cell (SOFC).

A fuel cell or fuel cell stack system may include a plurality of fuel cells or fuel cell stacks. A fuel cell or fuel cell stack system may generate electricity in the form of direct current (DC) from electrochemical reactions that take place in the fuel cell or fuel cell stack. A fuel processor converts fuel into a form usable by the fuel cell or fuel cell stack. If the fuel cell or fuel cell stack system is powered by a hydrogen-rich, conventional fuel, such as methanol, gasoline, diesel, or gasified coal, a reformer may convert hydrocarbons into a gas mixture of hydrogen and carbon compounds, or reformate. The reformate may then be converted to carbon dioxide, purified, and recirculated back into the fuel cell or fuel cell stack.

Fuel, such as hydrogen or a hydrocarbon, is channeled through field flow plates to an anode on one side of the fuel cell or fuel cell stack, while oxygen from the air is channeled to a cathode on the other side of the fuel cell or fuel cell stack. At the anode, a catalyst, such as a platinum catalyst, causes the hydrogen to split into positive hydrogen ions (protons) and negatively charged electrons. In the case of a polymer exchange membrane fuel cell (PEMFC), the polymer electrolyte membrane (PEM) permits the positively charged ions to flow through the PEM to the cathode. The negatively charged electrons are directed along an external loop to the cathode, creating an electrical circuit and/or an electrical current. At the cathode, the electrons and positively charged hydrogen ions combine with oxygen to form water, which flows out of the fuel cell or fuel cell stack.

The pressure differential between the anode and cathode needs to be above a minimum value to prevent gas cross-over between the anode and cathode streams, and/or to avoid mechanical stresses on the membrane electrode assembly (MEA) or on the electrolyte of the fuel cell. A mechanical regulator is typically used to control the flow of fresh fuel to the anode, and to maintain the pressure differential between the anode and the cathode. However, because of its mechanical design, the mechanical regulator offers minimal flexibility in varying a target pressure differential between the anode and the cathode. The rigidity of the mechanical design of the mechanical regulator presents certain challenges. For example, the mechanical regulator may allow for a change in pressure differential (e.g., droop) as the flow of fuel varies through the valve(s) of the mechanical regulator. Furthermore, the mechanical regulator must account for sensitivity to the inverse sympathetic ratio (ISR) which characterizes sensitivity of the fuel cell or fuel cell stack system to downstream pressure.

To overcome the challenges described above, a proportional control valve may be used to control the flow of fresh fuel to the anode, to monitor the pressure differential between the anode and cathode in a fuel cell or fuel cell stack, and/or to maintain the pressure differential between the anode and cathode in a fuel cell or fuel cell stack. The present disclosure provides systems and methods of using the proportional control valve to overcome current challenges known in the art relevant to the usage of the proportional control valve in the fuel cell or fuel cell stack system.

SUMMARY

Embodiments of the present disclosure are included to meet these and other needs.

In one aspect of the present disclosure, described herein, a fuel cell stack system includes a fuel cell stack and a proportional control valve. The fuel cell stack includes an anode with an anode inlet and an anode outlet and a cathode with a cathode inlet and a cathode outlet. The proportional control valve controls the flow of a fuel into the anode based on a pressure differential measured across any two of the anode inlet, the anode outlet, the cathode inlet, and the cathode outlet.

In the first aspect, the pressure differential may be measured by a first single point pressure sensor positioned at the anode inlet or the anode outlet and a second single point pressure sensor positioned at the cathode inlet or the cathode outlet. In this aspect, the measurements made by the first single point pressure sensor at the anode inlet or anode outlet and the second single point pressure sensor at the cathode inlet or cathode outlet may have a combined standard error of less than about 25% of a target bias pressure. The target bias pressure may be based on operating conditions of the fuel cell stack. Alternatively or additionally, the first single point pressure sensor at the anode inlet or anode outlet and the second single point pressure sensor at the cathode inlet or cathode outlet may be subject to a calibration. The calibration may be communicated to a controller of the proportional control valve.

Alternatively or additionally, a controller of the proportional control valve may target a bias pressure with an offset. The offset may be calibrated based on a known uncertainty in measurements made by the first and second single point pressure sensors, and on a minimum target bias pressure. The controller of the proportional control valve may include an inner control loop and an outer control loop. The inner control loop may use a force balance or inverse sympathetic ratio (ISR) compensation method. The inner control loop may be an open loop based on pressure downstream of the proportional control valve and may be estimated using a target flow rate. The inner control loop may compensate for a fuel supply temperature measurement by using a physical or virtual sensor.

In the first aspect, the first pressure differential may be measure by a pressure differential sensor across the anode and the cathode.

In the first aspect, the proportional control valve may be configured to operate in combination with an ejector. The proportional control valve may include at least one controller that corrects for non-linear dynamics when a primary nozzle of the ejector is choked or not choked.

In a second aspect of the present disclosure, described herein, a method of implementing and/or controlling a proportional control valve in a fuel cell or fuel cell stack includes the steps of measuring a pressure differential across any two of an anode inlet, and anode outlet, a cathode inlet, and a cathode outlet of the fuel cell or fuel cell stack, flowing a fuel through the proportional control valve based on the pressure differential, and controlling the proportional control valve operation by one or more controllers. An anode includes the anode inlet and the anode outlet. A cathode includes the cathode inlet and the cathode outlet. The step of measuring the pressure differential includes using a first single point pressure sensor at the anode inlet or the anode outlet and a second single point pressure sensor at the cathode inlet or the cathode outlet.

In the second aspect, the first and second single point pressure sensors may have a combined standard error less than about 25% of a target bias pressure.

In the second aspect, the method may further include calibrating offline the first single point pressure sensor at the anode inlet or the anode outlet and the second single point pressure sensor at the cathode inlet or the cathode outlet to determine a calibration value and communicating the calibration value to the one or more controllers of the proportional control valve.

In the second aspect, the method may further include introducing a disturbance using the proportional control valve based on operating condition of the fuel cell or fuel cell stack.

In the second aspect, the method may further include evaluating the first single point pressure sensor and the second single point pressure sensor relative to each other and introducing a correction into the proportional control valve if required.

In the second aspect, controlling the proportional control valve may further include implementing an inner control loop. The inner control loop may be an open loop based on pressure downstream of the proportional control valve. The method may further including implementing the inner control loop by estimating a target fuel flow rate. The inner control loop may use a force balance or inverse sympathetic ratio (ISR) compensation method. Alternatively or additionally, the inner control loop may compensate for a fuel supply temperature measurement by using a physical or virtual sensor.

BRIEF DESCRIPTION OF THE DRAWINGS

These and other features, aspects, and advantages of the present invention will become better understood when the following detailed description is read with reference to the accompanying drawings, in which like characters represent like parts throughout the drawings, wherein:

FIG. 1A is an illustration of a fuel cell system including one or more fuel cell stacks connected to a balance of plant.
FIG. 1B is an illustration of the fuel cell system including one or more fuel cell modules.
FIG. 1C is an illustration of components of a fuel cell in the fuel cell stack.
FIG. 2 is a graph showing the operating curves of a system comprising a fuel cell or fuel cell stack.
FIG. 3 is a schematic showing a mechanical regulator used along with a venturi or ejector in a fuel cell stack system.
FIG. 4 is a schematic showing a proportional control valve used along with a venturi or ejector in a fuel cell stack system.

FIG. 5 is a schematic showing inner and outer control loops used to monitor, measure, and/or control the anode pressure and primary flow.

## DETAILED DESCRIPTION

The present disclosure relates to operating systems and methods of using a proportional control valve for controlling the flow of fresh fuel to an anode of a fuel cell or fuel cell stack in a fuel cell stack system. The present disclosure relates to systems and methods for maintaining or monitoring a pressure differential between the anode and a cathode of the fuel cell or fuel cell stack. More specifically, the present disclosure relates to overcoming challenges in a fuel management system of the fuel cell system power module when using a proportional control valve.

The fuel cell system power module may comprise a fuel management system that controls, manages, implements, or determines the flow of a primary fuel (e.g., hydrogen) as a fuel stream to the anode. Fuel flow control may occur through an anode inlet at a rate that matches, exceeds, or is less than a fuel consumption rate of the fuel cell or fuel cell stack. The fuel flow control may depend on a recirculation rate of a fuel stream exhaust from a fuel cell or fuel cell stack outlet back to the anode inlet. The fuel flow control may depend on the operation of the fuel cell or fuel cell stack at a target pressure. The fuel flow control may depend on the maintenance of a pressure differential between the anode and cathode streams within a specified target range.

A minimum excess fuel target for a system may be specified as a minimum level of an excess fuel target required by the fuel cell or fuel cell stack based on the operating conditions of the fuel cell or fuel cell stack. A fuel cell or fuel cell stack may have an excess fuel level higher than the minimum excess fuel target, but achieving that higher level may result in a high parasitic load on the fuel cell or fuel cell stack. For example, the excess fuel level higher than the minimum excess fuel target may be achieved by maintaining high fuel flow rates at the anode, which may lead to pressure loss in the fuel cell or fuel cell stack.

A blower and/or a pump (e.g., a recirculation pump) may function at a capacity proportional to the pressure loss in the fuel cell or fuel cell stack. The blower and/or the pump may also function at a capacity proportional to the volumetric flow rate through the blower and/or the pump. A blower and/or a pump may use additional power to compensate for the pressure loss. Use of additional power by the blower and/or the pump may result in a high parasitic load on the fuel cell or fuel cell stack.

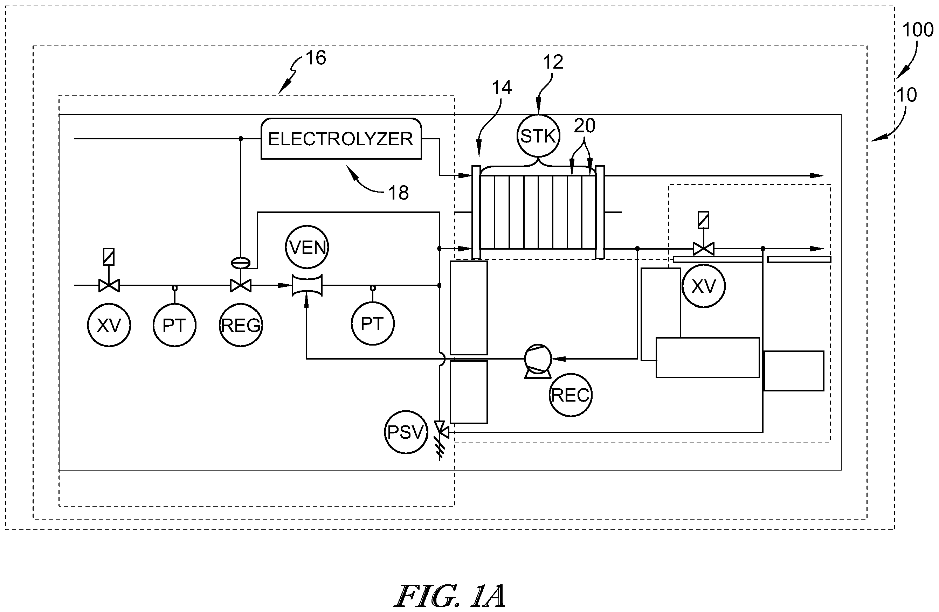

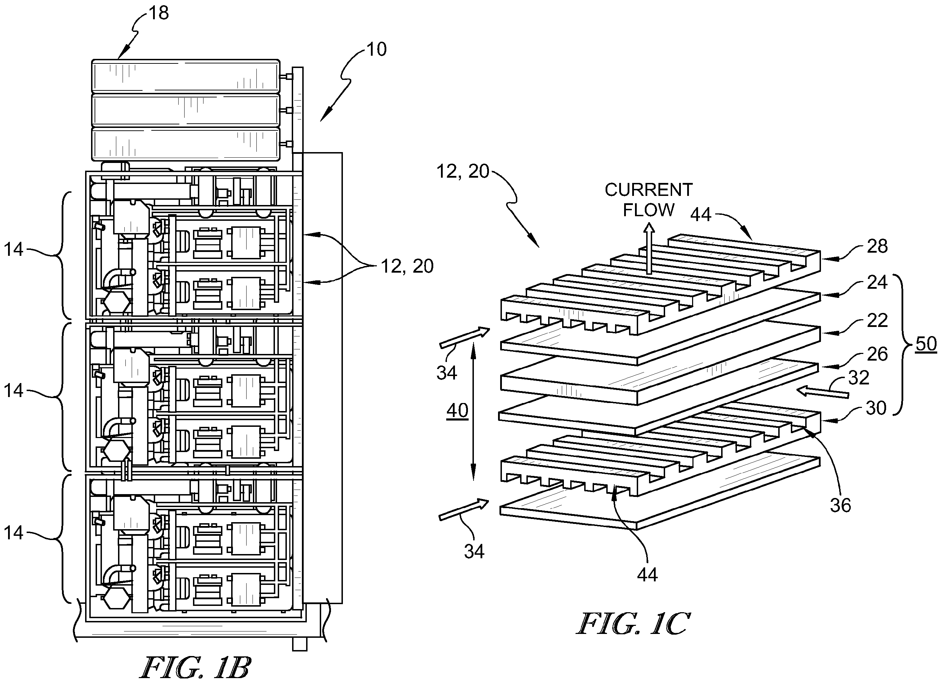

As shown in **FIG. 1A,** fuel cell systems or fuel cell stack systems **10** often include one or more fuel cell stacks **12** or fuel cell modules **14** connected to a balance of plant (BOP) **16,** including various components, to create, generate, and/or distribute electrical power for meet modern day industrial and commercial needs in an environmentally friendly way. As shown in FIGS. 1B and 1C, fuel cell systems **10** may include fuel cell stacks **12** comprising a plurality of individual fuel cells **20.** Each fuel cell stack 12 may house a plurality of fuel cells **20** connected together in series and/or in parallel. The fuel cell system **10** may include one or more fuel cell modules **14** as shown in **FIGS. 1A** and **1B.** Each fuel cell module **14** may include a plurality of fuel cell stacks **12** and/or a plurality of fuel cells **20.**

The fuel cells **20** in the fuel cell stacks **12** may be stacked together to multiply and increase the voltage output of a single fuel cell stack **12.** The number of fuel cell stacks **12** in a fuel cell system **10** can vary depending on the amount of power required to operate the fuel cell system **10** and meet the power need of any load. The number of fuel cells **20** in a fuel cell stack **12** can vary depending on the amount of power required to operate the fuel cell system **10** including the fuel cell stacks **12.**

The number of fuel cells **20** in each fuel cell stack **12** or fuel cell system **10** can be any number. For example, the number of fuel cells **20** in each fuel cell stack **12** may range from about 100 fuel cells to about 1000 fuel cells, including any specific number or range of number of fuel cells **20** comprised therein (e.g., about 200 to about 800). In an embodiment, the fuel cell system **10** may include about 20 to about 1000 fuel cells stacks **12,** including any specific number or range of number of fuel cell stacks **12** comprised therein (e.g., about 200 to about 800). The fuel cells **20** in the fuel cell stacks **12** within the fuel cell module **14** may be oriented in any direction to optimize the operational efficiency and functionality of the fuel cell system **10.**

The fuel cells **20** in the fuel cell stacks **12** may be any type of fuel cell **20.** The fuel cell **20** may be a polymer electrolyte membrane or proton exchange membrane (PEM) fuel cell, an anion exchange membrane fuel cell (AEMFC), an alkaline fuel cell (AFC), a molten carbonate fuel cell (MCFC), a phosphoric acid fuel cell (PAFC), or a solid oxide fuel cell (SOFC). In an exemplary embodiment, the fuel cells **20** may be a polymer electrolyte membrane or proton exchange membrane (PEM) fuel cell or a solid oxide fuel cell (SOFC).

In an embodiment shown in **FIG. 1C,** the fuel cell stack **12** includes a plurality of proton exchange membrane (PEM) fuel cells **20.** Each fuel cell **20** includes a single membrane electrode assembly (MEA) **22** and a gas diffusion layer (GDL) **24, 26** on either or both sides of the membrane electrode assembly (MEA) **22** (see **FIG. 1C).** The fuel cell **20** further includes a bipolar plate (BPP) **28, 30** on the external side of each gas diffusion layers (GDL) **24, 26.** The above mentioned components, **22, 24, 26, 30** comprise a single repeating unit **50.**

The bipolar plates (BPP) **28, 30** are responsible for the transport of reactants, such as fuel **32** (e.g., hydrogen) or oxidant **34** (e.g., oxygen, air), and cooling fluid **36** (e.g., coolant and/or water) in a fuel cell **20**. The bipolar plate (BPP) **28, 30** can uniformly distribute reactants **32, 34** to an active area **40** of each fuel cell **20** through oxidant flow fields **42** and/or fuel flow fields **44**. The active area **40,** where the electrochemical reactions occur to generate electrical power produced by the fuel cell **20**, is centered within the gas diffusion layer (GDL) **24, 26** and the bipolar plate (BPP) **28, 30** at the membrane electrode assembly (MEA) **22**. The bipolar plate (BPP) **28, 30** are compressed together to isolate and/or seal one or more reactants **32** within their respective pathways, channels, and/or flow fields **42, 44** to maintain electrical conductivity, which is required for robust during fuel cell **20** operation.

The fuel cell system **10** described herein, may be used in stationary and/or immovable power system, such as industrial applications and power generation plants. The fuel cell system **10** may also be implemented in conjunction with electrolyzers **18** and/or other electrolysis system **18**. In one embodiment, the fuel cell system **10** is connected and/or attached in series or parallel to an electrolysis system **18,** such as one or more electrolyzers **18** in the BOP **16**.

The present fuel cell system **10** may also be comprised in mobile applications. In an exemplary embodiment, the fuel cell system **10** is in a vehicle and/or a powertrain **100**. A vehicle **100** comprising the present fuel cell system **10** may be an automobile, a pass car, a bus, a truck, a train, a locomotive, an aircraft, a light duty vehicle, a medium duty vehicle, or a heavy duty vehicle.

The vehicle and/or a powertrain **100** may be used on roadways, highways, railways, airways, and/or waterways. The vehicle **100** may be used in applications including but not limited to off highway transit, bobtails, and/or mining equipment. For example, an exemplary embodiment of mining equipment vehicle **100** is a mining truck or a mine haul truck.

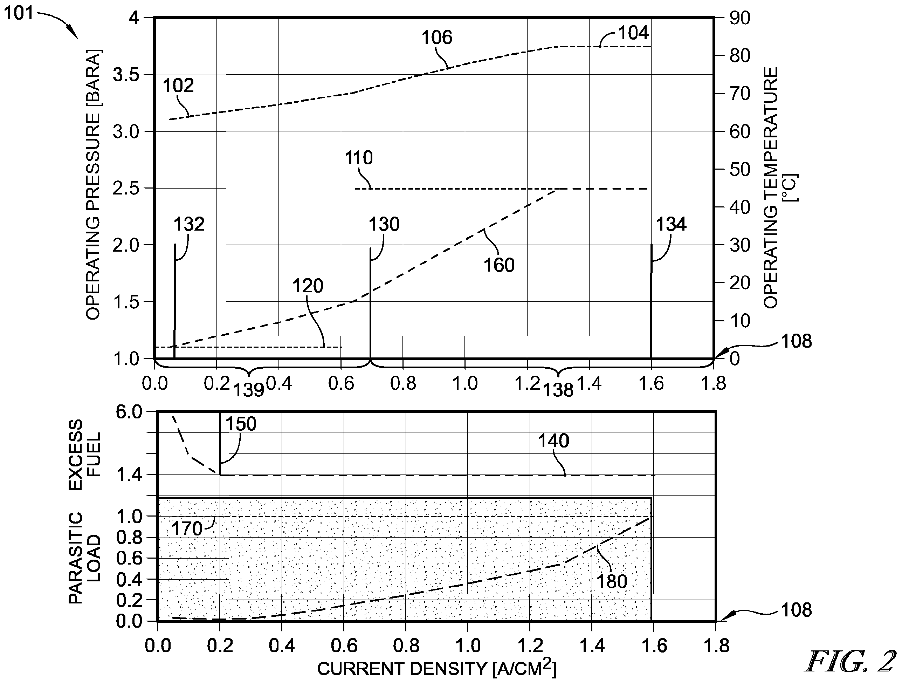

One embodiment of operating characteristics of the fuel cell system **10** comprising a fuel cell **20** or fuel cell stack **12** is illustrated in graph **101** in **FIG. 2**. Operating pressures and associated operating temperatures are shown as a function of current density **108**. The fuel cell **20** or fuel cell stack **12** may be required to operate within a pressure range known as anode inlet manifold pressure ($P_{AIM}$) measured at the anode inlet manifold 213.

Highest anode inlet manifold pressure ($P_{AIM\_HI}$) of the fuel cell **20** or fuel cell stack **12** is denoted by **110**. Lowest anode inlet manifold pressure ($P_{AIM\_LO}$) of a fuel cell **20** or fuel cell stack **12** is denoted by **120**. The range **160** between the highest anode inlet manifold pressure ($P_{AIM\_HI}$) **110** and the lowest anode inlet manifold pressure ($P_{AIM\_LO}$) **120** indicates a target anode inlet manifold pressure range or operating pressure. A target temperature of the fuel cell system **10** may range from a low fuel supply operating temperature ($T_{CV\_LO}$) **102** to a high fuel supply operating temperature ($T_{CV\_HI}$) **104**.

It is critical to operate the fuel cell **20** or fuel cell stack **12** at a pressure that ranges from about or approximately the highest anode inlet manifold pressure ($P_{AIM\_HI}$) **110** to about or approximately the lowest anode inlet manifold pressure ($P_{AIM\_LO}$) **120** when the fuel cell **20** or fuel cell stack **12** is operating above a critical current density ($i_{LO\_CR}$) **130**. In some embodiments, the critical current density ($i_{LO\_CR}$) **130** may be at about 0.7 A/cm$^2$. In other embodiments, the critical current density ($i_{LO\_CR}$) **130** may be at about 0.6 A/cm$^2$. In some further embodiments, the critical current density ($i_{LO\_CR}$) **130** may be higher or lower than 0.7 A/cm$^2$, such as ranging from about 0.5 A/cm$^2$ to about 0.9 A/cm$^2$, including every current density **108** or range of current density **108** comprised therein.

The fuel cell **20** or fuel cell stack **12** may operate at a high current density **138,** which may be higher than the critical current density ($i_{LO\_CR}$) **130**. The high current density **138** may range from about 1.3 A/cm$^2$ to about 2.0 A/cm$^2$, or about 1.3 A/cm$^2$ to about 1.6 A/cm$^2$, or about 1.0 A/cm$^2$ to about 1.6 A/cm$^2$, including every current density **108** or range of current density **108** comprised therein.

In some embodiments, operating the fuel cell **20** or fuel cell stack **12** at such high current density **138** (e.g., at about 1.6 A/cm$^2$) with result in operating the fuel cell **20** or fuel cell stack **12** at pressures and temperatures different from optimal target operating pressures and operating temperatures. Operating the fuel cell **20** or fuel cell stack **12** at pressures and temperatures different from the optimal target operating pressures and operating temperatures may lower the efficiency of the fuel cell **20** or fuel cell stack **12**. Such operation may also result in damage to the fuel cell **20** or fuel cell stack **12** because of MEA **22** degradation (e.g., due to starvation, flooding and/or relative humidity effects). In some embodiments, there may be more flexibility in the fuel cell **20** or fuel cell stack **12** operating pressure and operating temperature when the fuel cell **20** or fuel cell stack **12** is operating below the critical current density ($i_{LO\_CR}$) **130**. The present operating system comprising the fuel cell or fuel cell stack can operate at a minimum current density ($i_{MIN}$) **132** and a maximum current density ($i_{MAx}$) **134**.

In one embodiment, the fuel cell system **10** comprising the fuel cell **20** or fuel cell stack **12** may operate in a functional range that may be different than that indicated by the curve **160** in **FIG. 2**. The fuel cell system **10** may operate at higher pressures (e.g., the highest anode inlet manifold pressure ($P_{AIM\_HI}$) **110**) or at a current density **108** as low as the critical current density ($i_{LO\_CR}$) **130**. For example, the fuel cell system **10** may extend steady state operation at about 2.5 bara down to about the critical current density ($i_{LO\_CR}$) **130**. Pressure measurements in bara refer to the absolute pressure in bar.

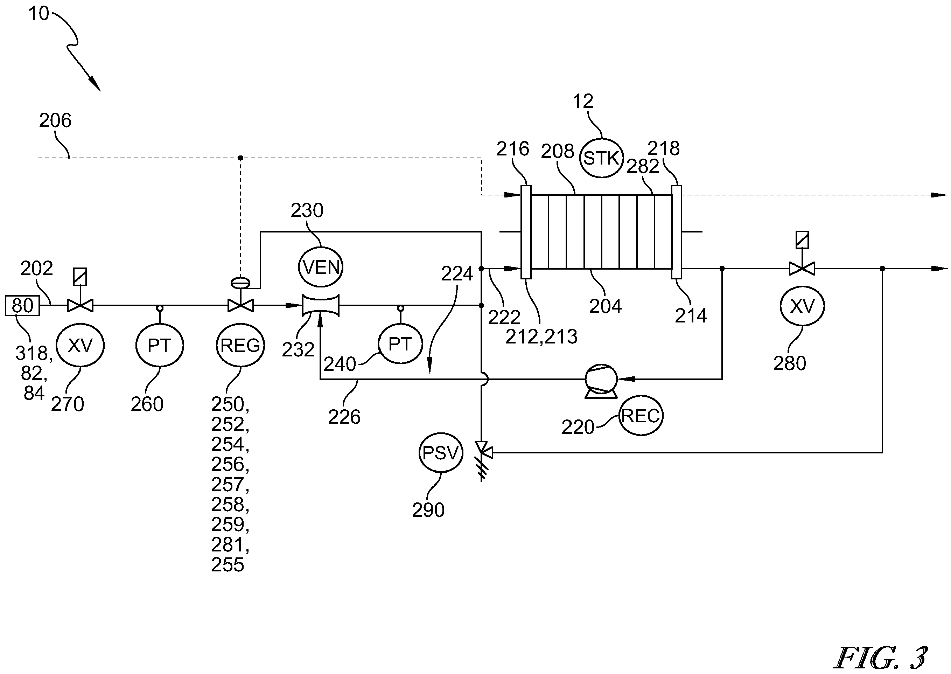

**FIG. 3** illustrates one embodiment of a fuel cell system **10** comprising a fuel cell stack **12**, a mechanical regulator **250**, a recirculation pump or blower **220** in series or in parallel to the fuel cell stack **210**, an exhaust valve **280**, a shut off valve **270**, a pressure transfer valve **290**, one or more pressure transducers **240/260,** and a venturi or ejector **230**.

In some embodiments, the fuel cell system **10** may comprise one or more fuel cell stacks **12** or one or more fuel cells **20.** In other embodiments, there may also be one or multiple valves, sensors, compressors, regulators, blowers, injectors, ejectors, and/or other devices in series or in parallel with the fuel cell stack **12.**

In one embodiment of the fuel cell system **10,** an anode inlet stream **222,** flows through an anode **204** end of the fuel cell stack **12.** Typically, the anode inlet stream **222** may be a mixture of fresh fuel (e.g., $H_2$) and anode exhaust (e.g., $H_2$ fuel and/or water). Conversely, oxidant **206** (e.g., air, oxygen, or humidified air) may flow through the cathode **208** end of the fuel cell stack **12.**

Excess fuel may be provided at the anode inlet **212** to avoid fuel starvation towards the anode outlet **214.** Water content of the anode inlet stream **222** or the relative humidity of the anode inlet stream **222** may impact the performance and health of the fuel cell stack **12.** For example, low inlet humidity may lead to a drier membrane electrode assembly (MEA) **22,** resulting in reduced performance. Low inlet humidity may also induce stresses that can lead to permanent damage to the membrane electrode assembly (MEA) **22.** High humidity levels may lead to flooding within the fuel cell **20** or fuel cell stack **12,** which can induce local starvation and/or other effects that may reduce fuel cell performance and/or damage the membrane electrode assembly (MEA) **22.** In some embodiments, there may be an optimal inlet relative humidity range in which fuel cell performance is improved and membrane electrode assembly (MEA) **22** degradation rate is minimized. For example, the fuel cell **20** or fuel cell stack **12** may achieve optimal performance when the relative humidity level of the anode inlet stream **222** is in the range of about 30% to about 35%, including any percentage or range comprised therein.

The source of the excess fuel and water content in a fuel cell **20** may be from a secondary or recirculated flow **226.** Composition of the secondary flow **226** in the fuel cell system **10** is dependent on its composition of anode outlet stream **225.** In some embodiments, the anode outlet stream **225** may be saturated with water at a given anode gas outlet temperature and pressure. Thus, the variation in the composition of the secondary flow **226** may be taken into account when determining a required secondary flow **226** to meet the excess fuel or relative humidity targets of the anode inlet stream **222.**

The required flow rate of the secondary flow **226** can be determined by either the need for excess fuel, or by the need for increased water content, whichever calls for a higher flow of the secondary flow **226.** The required flow of the secondary flow **226** can be expressed as the target entrainment ratio (ER). Alternatively, a target effective excess fuel ratio or a minimum required fuel ratio may account for either the need for excess fuel, or for the increased water content of the anode inlet stream **222.**

Excess fuel ratio ($\lambda$) or the anode stoichiometry ratio is defined as the ratio of anode inlet fuel flow rate to the fuel consumed in the fuel cell **20** or fuel cell stack **12.** Excess fuel ratio ($\lambda$) may be used to represent the required composition of the secondary flow **226** to meet the required anode inlet stream **222** characteristics. The required anode inlet stream **222** characteristics may be the more stringent of excess fuel ratio or relative humidity requirements of the fuel cell system **10.**

Excess fuel ratio ($\lambda$) or the anode stoichiometry ratio is defined as the ratio of anode inlet stream **222** flow rate to the fuel consumed in the fuel cell **20** or fuel cell stack **12.** Minimum required excess fuel ratio **140** as a function of current density **108** is shown in **FIG. 2.** In some embodiments, the fuel cell system **10** requires a fuel amount at or above the minimum required excess fuel ratio **140.** In other embodiments, the fuel cell system **10** may requier a target water or humidity level, which may affect the excess fuel ratio ($\lambda$) **140.** The excess fuel ratio ($\lambda$) **140** may be flat across the fuel cell system **10** operating range except at low current densities **108,** such as at a current density **108** at or below an excess fuel ratio current density threshold ($i_{\_\lambda\_THV}$) **150.** Alternatively, or additionally, the excess fuel ratio ($\lambda$) **140** may change with a change in current density **108.** In some embodiments, the excess fuel ratio ($\lambda$) **140** above the excess fuel ratio current density threshold ($i_{\_\lambda\_THV}$) **150** may be in the range from about 1.3 to about 1.9, including any ratio comprised therein. In one preferable embodiment, the excess fuel ratio ($\lambda$) **140** above the excess fuel ratio current density threshold ($i_{\_\lambda\_THV}$) **150** may be in the range of about 1.4 to about 1.6, including any ratio or range of ratio comprised therein.

In some embodiments, the excess fuel ratio current density threshold ($i_{\_\lambda\_THV}$) **150** of the fuel cell system **10** may be at or about 0.2 A/cm$^2$. In other embodiments, the excess fuel ratio current density threshold ($i_{\_\lambda\_THV}$) **150** may be at a different current density **108.** For example, the excess fuel ratio current density threshold ($i_{\_\lambda\_THV}$) **150** may be at a current density **108** in the range of about 0.05 A/cm$^2$ to about 0.4 A/cm$^2$, including any current density **108** or range of current density **108** comprised therein. In one preferable embodiment, the excess fuel ratio current density threshold ($i_{\_\lambda\_THV}$) **150** may be about 0.1 A/cm$^2$ or about 0.2 A/cm$^2$. The excess fuel ratio current density threshold ($i_{\_\lambda\_THV}$) **150** may depend on the operating conditions of the fuel cell **20** or fuel cell stack **12.**

In one embodiment, if the fuel cell **20** or fuel cell stack **12** is operating below the excess fuel ratio current density threshold ($i_{\_\lambda\_THV}$) **150,** a minimum volumetric flow rate may be maintained through the anode **204** to flush out any liquid water that might form in the fuel cell **20** or fuel cell stack **12.** At low flow rates (e.g., below about 0.2 A/cm$^2$ or below about 0.1 A/cm$^2$), there may be flooding in the fuel cell **20** or fuel cell stack **12.** If the minimum volumetric flow rate is below the excess fuel ratio current density threshold ($i_{\_\lambda\_THV}$) **150,** the rate of fuel cell **20** or fuel cell stack **12** degradation may increase.

A venturi or ejector **230** may be used in the fuel cell system **10**. The venturi or ejector **230** may be sized, such that the fuel cell system **10** may not require the assistance of a recirculation pump **220,** such as a blower, at certain current densities **108**. Absence of usage of the recirculation pump or blower **220** may result in a decrease in parasitic load, as shown by the curves **170** and **180** of **FIG. 2**. The curve **170** shows a fraction of flow that is delivered by the recirculation pump or blower **220** in the absence of a venturi or ejector **230**. The curve **180** shows the corresponding parasitic load. The parasitic load may increase with an increase in current density, as shown by the curve **180,** because recirculation pump or blower **220** may function at a capacity proportional to pressure loss in the fuel cell **20** or fuel cell stack **12** and/or proportional to the required flow rate of the secondary flow **226** in the fuel cell **20** or fuel cell stack **12**.

The fuel cell **20** or fuel cell stack **12** may be initially operating at high current density **138,** at high operating temperatures and pressures such that the fuel cell load under this initial operating condition is high. The fuel cell load is defined as:

$$\text{Load} = \text{stack power} = \text{current x fuel cell or fuel cell stack voltage} = \text{current density x fuel cell area x fuel cell or fuel cell stack voltage}$$

The fuel cell **20** or fuel cell stack **12** may be in a load shedding state when the load demand for power is rapidly reduced or shed requiring the fuel cell **20** or fuel cell stack **12** to reduce the current delivered.

During transient operations in the fuel cell **20** or fuel cell stack **12,** the operating pressure in the fuel cell **20** or fuel cell stack **12** may change based on the changes in the fuel cell **20** or fuel cell stack **12** operating temperature. For example, during load shedding, the fuel cell system **10** may have an operating pressure that corresponds to a transient operating pressure ($P_{\_AIM\_TRS}$) that may be greater than its steady state operating pressure ($P_{AIMSS}$). In some embodiments, the transient operating pressure ($P_{\_AIM\_TRS}$) may equal the highest anode inlet manifold pressure ($P_{AIM\_HI}$) **110** even at low current densities **108**. During load acceptance, the rate of increase in current density **108** is limited, and the steady state operating pressure ($P_{AIM}ss$) may equal the anode inlet manifold pressure ($P_{AIM}$).

In one embodiment, the operating pressure of the fuel cell **20** or fuel cell stack **12** may optimize the balance between enabling efficient fuel cell **20** or fuel cell stack **12** operation and the parasitic load required to operate at the chosen operating pressure (e.g., the parasitic load of an air compressor, a blower, and/or a pump). In some embodiments, the operating temperature, operating pressure, and/or excess air ratio **140** may maintain a target relative humidity (RH) for the fuel cell **20** or fuel cell stack **12** operation. The operating temperature, operating pressure, and/or excess air ratio **140** may be determined by targeting a specific value for the relative humidity (RH) at the cathode **208**.

The excess air ratio is defined similarly to excess fuel ratio **140,** but refers to the cathode **208** side flow (i.e., excess $O_2$ in the air). The combination of excess air ratio, pressure and temperature are used together to control humidity on the cathode **208** side, which in turn impacts water content on the anode **204** ($H_2$) side. In one embodiment, temperature, pressure, and excess air ratio that vary with current density may be used to control humidity on the cathode **208** side. In some embodiments, excess air ratio may be about 2.0. In other embodiments, excess air ratio may be in the range of about 1.7 to about 2.1, including any ratio or range of ratio comprised therein. In some other embodiments, excess air ratio may be in the range of about 1.8 to about 1.9, including any ratio or range of ratio comprised therein, under pressurized operation. Excess air ratio may increase to below an air threshold current to keep volumetric flow rate high enough to prevent flooding in the fuel cell **20** or fuel cell stack **12** on the cathode **208** side.

The target relative humidity (RH) may be maintained by using a humidification device in combination with the operating pressure and operating temperature. For example, a humidification device may be used on the cathode **208** side of the fuel cell **20** or fuel cell stack **12**. If the target relative humidity (RH) and the target operating pressure of the fuel cell **20** or fuel cell stack **12** are specified, the target temperature for the fuel cell **20** or fuel cell stack **12** operation may be determined.

The mechanical regulator **250** is a control valve **254** that may be used to control the flow of fresh fuel **202** also referred to as primary flow, primary mass flow, primary fuel, or motive flow to the anode **204**. Pressure differential between the gas streams (e.g. anode inlet stream **222** and air **206)** at the anode **204** and the cathode **208** may provide an input signal **256** to a controller **252** in the mechanical regulator **250**.

The controller **252** of the mechanical regulator **250** may determine the flow of the anode inlet stream **222** through an anode inlet **212** at the anode **204**. The control valve **254** may be a proportional control valve, or an injector. In other embodiments, the control valve **256** may comprise an inner valve **258,** coil **255,** or solenoid **257** that controls the opening or closing of the control valve **254**. The input signal **256** from the anode **204** and/or cathode **208** of the fuel cell **20** or fuel cell stack **12** may be a physical signal **256** or a virtual (e.g., an electronic) signal **256**. The signal may be any type of communicative or computer signal **256** known in the art.

Flow rate of the primary fuel **202** or primary flow rate may be controlled to match the fuel consumption in the fuel cell stack **12** based on the operating pressure (e.g., anode pressure). In some embodiments, the pressure in the anode **204** may stabilize when fuel consumption matches the fresh fuel feed at the anode **204** assuming that all other parameters are equal. Since the functioning of the mechanical regulator **250** is based on the pressure differential between the anode **204** and cathode **208,** a target pressure differential needs to be maintained when using the mechanical regulator **250.** In some embodiments, pressure at the cathode **208** is controlled and/or maintained at a target level via cathode side controls **282.**

A mechanically regulated approach, such as by employing actuators **282,** may use pressure signals **281** from cathode/air inlet **216** to control mass flow and maintain an appropriate pressure on the cathode **208** side of the fuel cell stack **12.** In some embodiments, pressure signals **218** from cathode **208** side are inputs to the mechanical regulator **250.** In some embodiments, the anode **204** side mass flow and anode **204** side pressure may be controlled by using the pressure signals **281** from cathode **208** side and measuring one or more anode **204** side conditions.

The pressure signals **281** from cathode **208** side may change the position of an inner valve **258** in the mechanical regulator **250** to control mass flow through the mechanical regulator **250** and maintain the target pressure differential between the anode **204** and the cathode **208.** The input signal **256** that acts on the mechanical regulator **250** is effectively a pressure differential that acts on a diaphragm **257** or other parts of the mechanical regulator **250.** No other direct measurement of the pressure differential may be undertaken. A single point pressure at the anode **204** may be calculated to be the cathode **208** side pressure plus the pressure differential between the gas streams (e.g., **222)** at the anode **204** and the gas streams (e.g., **206)** at the cathode **208.**

The venturi or ejector **230** may draw the secondary flow **226** also referred to as secondary mass flow, entrainment flow, or recirculation flow, using a flow pressure across an anode gas recirculation (AGR) loop **224.** In some embodiments, the anode gas recirculation loop **224** may include the venturi or ejector **230,** the fuel cell stack **12,** and a secondary inlet **232,** such as one comprised in a suction chamber **234** in the venturi or ejector **230,** and/or other piping, valves, channels, manifolds associated with the venturi or ejector **230** and/or fuel cell stack **12.** The recirculation pump or blower **220** may increase or decrease the differential pressure across the AGR loop **224.**

The fuel cell system **10** may require a target water or humidity level, which may drive the flow of saturated secondary flow **226.** The saturated secondary flow **226** may then drive the primary flow **202,** such that the target excess fuel ratio ($\lambda$) **140** may be dependant on the target water or humidity level.

The venturi or ejector **230** may be required to operate and/or perform robustly to deliver the required primary flow **202** at the required excess fuel ratio ($\lambda$) **140.** Operating characteristics of the recirculation pump or blower **220** may be distinct from a venturi or ejector **230.** The secondary flow may enter the venturi or ejector **230** through a secondary inlet **232** in a suction chamber **234** at a secondary inlet pressure ($P_S$) and a secondary inlet temperature ($T_S$).

The turn down ratio of the fuel cell system **10** is defined as the ratio of the maximum capacity of the venturi or ejector **230** to the minimum capacity of the venturi or ejector **230.** The fuel cell system **10** may be designed to maximize the venturi or ejector **230** turn down ratio. Consequently, maximizing the turn down ratio of the venturi or ejector **230** also works to minimize the size and parasitic load associated with the recirculation pump (blower) **220.**

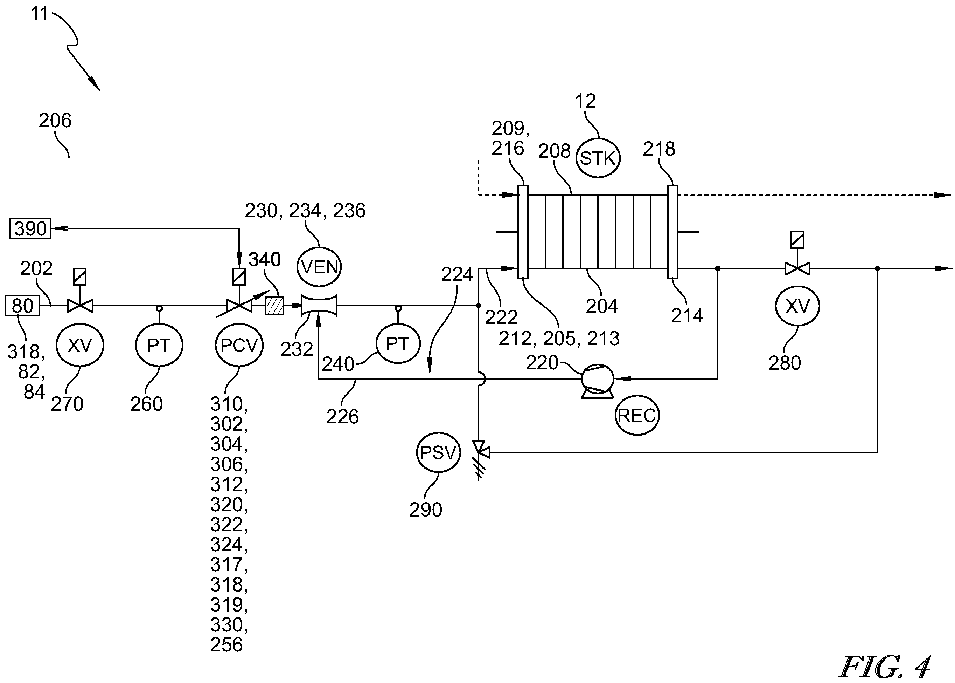

In one embodiment, as illustrated in a fuel cell system **11** shown in **FIG. 4,** a proportional control valve **310** may be used instead of the mechanical regulator **250.** The proportional control valve **310** is electronically controlled and may provide more flexibility in controlling the single point pressure at the anode **204** than a mechanical regulator **250.** The proportional control valve **310** may be used to control the primary flow **202** in the fuel cell system **11.** The flexibility provided by the proportional control valve **310** may be advantageous when there is a change in pressure differential due to change in the operating current density **160** or when the fuel cell system **10/11** is under transient conditions

For example, the proportional control valve **310** may beneficially allow for active management of the differential pressure, may avoid droop issues, and/or provide flexibility in operating the fuel cell stack **12** under different operating conditions. Illustrative operating conditions may include, but are not limited to operating current density, operating pressure, operating temperature, operating relative humidity, fuel supply pressure, fuel supply temperature, required secondary flow, entrainment ratio, parasitic load limitations, power needs, pressure loses in the anode gas recirculation loop **224,** venturi or ejector **230** performance and/or efficiency, recirculation pump or blower **220** performance and/or efficiency, fuel density, purge flow, and choked or unchoked (e.g., not choked) flow conditions.

The control valve **254,** such as the mechanical regulator **250,** the proportional control valve **310,** or an injector (not shown), may be sized to allow a maximum fuel flow rate that may be required. In some embodiments, the maximum fuel flow rate required may include the fuel consumed within the fuel cell stack **12,** plus any fuel lost from the fuel cell system **10/11** due to purge flow. The fuel cell system **10/11** may purge a small amount of fuel (e.g., about 10%). In other embodiments, the system may purge more or less than about 10% of the fuel flowing through the fuel cell stack **12.** The purge flow of fuel may be instantaneous or may occur at fixed or changing time intervals. Thus, the required mass flow rate of fuel may be about 10% higher than the mass flow rate when the system **10/11** is not purging any fuel.

In one embodiment, the control valve **254** of the system **10/11** may accurately control the fresh fuel flow **202** and maintain the pressure differential between the anode **204** and the cathode **208** of the fuel cell stack **12.** Target pressure at the anode **204** side ($P_{ANODE}$) may depend on pressure at the cathode **208** side ($P_{CATHODE}$) and a bias pressure ($\Delta P_{BIAS}$).

$$P_{ANODE} = P_{CATHODE} + \Delta P_{BIAS} \quad (1)$$

In one embodiment, the pressure measured at the anode **204** side ($P_{AN\_MEASURED}$) may be different than the target anode pressure ($P_{ANODE}$). The differential pressure ($\Delta P$) between the anode **204** and the cathode **208** is determined as follows.

$$\Delta P = P_{AN\_MEASURED} - P_{CATHODE} = P_{AN\_MEASURED} - P_{ANODE} + \Delta P_{BIAS} \quad (2)$$

In one embodiment, fuel (e.g., $H_2$) is supplied to the fuel cell system **10/11** by a fuel supply system **80,** such as $H_2$ storage tanks **82** with flow regulators **84.** A fuel supply pressure ($P_{CV}$) may be controlled upstream of a control valve **256** (e.g., a mechanical regulator **250,** a proportional control valve **310,** or an injector). The fuel supply pressure (Pcv) is kept at a constant value ranging from about 7 bara to about 20 bara, including any pressure or range of pressure comprised therein. In an illustrative embodiment, the fuel supply pressure (Pcv) is kept at a constant value of about 12 bara. There may be some variability in the fuel flow rate from the fuel supply system **80,** such that there may be droop in the system **10/11.**

A fuel supply temperature ($T_{CV}$) upstream of a control valve **256** may vary depending on ambient conditions such as temperature, pressure, and/or relative humidity. The fuel supply temperature ($T_{CV}$) may vary from about -20°C to about 100°C, including any temperature or range of temperature comprised therein. The fuel cell system **10/11** may need to be protected from variations in the fuel supply temperature ($T_{CV}$) due to variation in ambient conditions.

The control valve **256** may be sized based on a certain fuel sizing pressure ($P_{\_CV\_MIN}$) and a certain fuel sizing temperature (Tcv_sz). In some embodiments, the position of the inner valve **258** inside the control valve **256** (e.g., the mechanical regulator **250)** during operation may decrease the control valve **256** opening if the fuel supply pressure (Pcv) is higher than the fuel sizing pressure ($P_{\_CV\_MiN}$). This may also occur if the fuel supply temperature (Tcv) is lower than the fuel sizing temperature (T_cv sz).

The fuel supply pressure ($P_{CV}$) may stay absolutely or approximately constant. The anode inlet manifold pressure ($P_{AIM}$) may decrease with the fuel flow rate. In other embodiments, the difference between the fuel supply pressure (Pcv) and the anode inlet manifold pressure ($P_{AIM}$), as determined by $P_{CV} - P_{AIM}$, may increase with the flow rate of the primary flow **202.** In some embodiments, the inner valve **258** opening of the control valve **256** downstream of the fuel supply system **80** may be sized such that the inner valve **258** opening of the control valve **256** may operate under choked flow conditions at the inner valve **258** orifice. Thus, the flow rate of the primary flow **202** may be controlled directly based on the control valve **256** position and the flow rate may not be sensitive to any downstream pressure.

A pressure recovery factor (PRF) may be important under high primary flow conditions, such as when the operating current density **160** is close to the highest current density **138,** such as at about 1.6 Amps/cm$^2$ as demonstrated in **FIG. 2.** The pressure recovery factor (PRF) is determined as follows.

$$PRF = \sqrt{[(P_1 - P_2)/(P_1 - P_{VC})]} \quad (3)$$

$P_1$ is an upstream pressure measured upstream of the control valve **256,** such as the fuel supply pressure ($P_{CV}$). $P_2$ is a downstream pressure measured downstream of the control valve **256.** $P_2$ is the anode inlet manifold pressure ($P_{AIM}$) if the fuel cell system **10/11** does not have a venturi or ejector **230** or is a primary nozzle inlet pressure ($P_O$) if the system **10/11** has a venturi or ejector **230.** The primary nozzle inlet pressure ($P_O$) is the pressure at the primary nozzle **236** of the venturi or ejector **230.** $P_{VC}$ is the pressure at the vena contracta **259** of the control valve **256** such as the mechanical regulator **250.**

If the pressure recovery factor (PRF) is equal to 1, then downstream pressure ($P_2$) is equal to the upstream pressure (Pi) divided by 1.9. In some embodiments, if the operating system **10/11** does not have a venturi or ejector **230,** the anode inlet manifold pressure ($P_{AIM}$) of the system **10/11** is equal to the upstream pressure (Pi) divided by 1.9. In other embodiments, if the fuel cell system **10/11** has a venturi or ejector **230,** the primary nozzle inlet pressure ($P_O$) of the fuel cell system **10/11** is equal to the upstream pressure (Pi) divided by 1.9. In some embodiments, the primary nozzle inlet pressure ($P_O$) of the fuel cell system **10/11** may influence the sizing of a primary nozzle ("nozzle") **236** of the venturi or ejector **230.**

The pressure recovery factor (PRF) at the highest primary fuel flow of the fuel cell system **10/11** may be used to determine either: (a) the fuel sizing pressure ($P_{\_CV\_\_MIN}$) which may be the minimum fuel supply pressure required for a given maximum primary nozzle inlet pressure ($P_{O\_MAX}$) and/or (b) the maximum primary nozzle inlet pressure ($P_{O\_MAX}$) at the given the fuel sizing pressure ($P_{\_CV\_MIN}$) which may be the minimum fuel supply pressure. The primary nozzle **236** of the venturi or ejector **230** may be sized to deliver required fuel flow, including purge flow, at empty pressure conditions (P$_{EMPTY}$).

Empty pressure conditions (P$_{EMPTY}$) comprise conditions when the primary nozzle inlet pressure (P$_O$) is or is about equal to the maximum primary nozzle inlet pressure (P$_{O\_MAX}$). The maximum primary nozzle inlet pressure (P$_{O\_MAX}$) depends on the pressure recovery factor (PRF) and the fuel sizing pressure (P$_{\_CV\_MIN}$). In some embodiments, the empty pressure (P$_{EMPTY}$) may be greater than or less than about 12 bara. In other embodiments, the empty pressure (P$_{EMPTY}$) may be at or about 12 bara.

The inverse sympathetic ratio (ISR) of the control valve **256** (e.g., mechanical regulator **250,** proportional control valve **310,** or injector) may also be important for measuring and/or determining the pressure differential conditions. The inverse sympathetic ratio (ISR) characterizes the sensitivity of force balance on the control valve **256** to downstream pressure (P$_2$). If the fuel cell system **10/11** does not have a venturi or ejector **230,** the downstream pressure (P$_2$) is the anode inlet manifold pressure (P$_{AIM}$). If the fuel cell system **10/11** has a venturi or ejector **230,** the downstream pressure (P$_2$) is the primary nozzle inlet pressure (P$_O$).

The inverse sympathetic ratio (ISR) may have a measureable and/or noticeable effect on the fuel cell system **10/11.** The inverse sympathetic ratio (ISR) may help to reduce leakage in the control valve when under high pressure differential conditions, such as at or about 20 bara. If the control valve **256** comprises a dome regulated mechanical valve **250,** the inverse sympathetic ratio (ISR) may introduce a non-linearity in the flow through the control valve **256** as it relates to the dome load pressure differential.

For example, at high current density **138** (e.g., about 1.6 Amps/cm$^2$), the downstream pressure (P$_2$, such as P$_{AIM}$) may be higher than the downstream pressure (P$_2$) at low current density **139** which is less than or about the critical current density (i$_{LO\_CR}$) **130** of the fuel cell system **10/11** based on the operating conditions. A high downstream pressure (P$_2$), such as at or about 2.5 bara, may increase the inner valve **258** opening in the mechanical regulator **250** even if the bias pressure ($\Delta$P$_{BIAS}$).remains the same. Thus, mass flow through the mechanical valve **250** may be higher. A higher bias pressure ($\Delta$P$_{BIAS}$).may result under high current density **138** conditions (e.g., about 1.6 Amps/cm$^2$).

Under transient conditions, when the downstream pressure (P$_2$, such as P$_{AIM}$) stays at or about 2.5 bara, at low current densities **139** (e.g., less than critical current density (i$_{LO\_CR}$) **130**) based on the operating conditions, the mass flow rate in the fuel cell system **10/11** may be higher than when the fuel cell system **10/11** is operating at the steady state due to the ISR effect. The selection and/or sizing of the mechanical valve **250** may account for, compensate for, or operate based on the non-linearity introduced due to the inverse sympathetic ratio (ISR) to ensure the target bias pressure (P$_{BIAS}$) is maintained across the entire operating range of the fuel cell system **10/11.**

Inaccurate measurements of pressure can cause gas diffusion resulting in a high concentration of contaminant gases on at the anode **204** side, reduced fuel cell stack **12** efficiency, and/or higher purge rates in the fuel cell stack **12.** If higher pressure differentials are allowed because of inaccurate pressure measurements at the anode **204** or at the cathode **208,** there may be mechanical damage to the fuel cell stack **12** (e.g., MEA **22** fatigue and/or failure). This is especially important when using the proportional control valve **310** because when the mechanical regulator **250** is used, the effective pressure differential between the anode **204** and the cathode **208** is measures instead of the single point pressure at anode **204** and the single point pressure at cathode **208** is measured. The spring strength of the mechanical regulator **250** can be chosen to ensure that the mechanical regulator **250** is able to measure the pressure differential.

Similarly, if the fuel cell system **10/11** comprises a proportional control valve **310,** an actuator **304** may be signaled by the one or more controllers **302** of the proportional control valve **310** to keep the inner valve **306** of the proportional control valve **310** in a particular position. The particular position may be determined by the controller **302.** The proportional control valve **310** may be used in combination with a venturi or ejector **230.** The one or more controllers **302** of the proportional control valve **310** may measure, account for, or correct for the non-linear dynamics when the primary nozzle **236** of the ejector **230** is not choked. The one or more controllers **302** of the proportional control valve **310** may measure, account for, or correct for the non-linear dynamics when the primary nozzle **236** of the ejector **230** is choked. The signal **312** sent to the actuator **304** may be influenced by the inverse sympathetic ratio (ISR).

In one embodiment, the one or more controllers **302** of the proportional control valve **310** may proactively account for sensitivity of the proportional control valve **310** position to downstream pressure (P$_2$). The one or more controllers **302** may proactively account for the situation where the primary nozzle **236** is no longer choked under low current conditions **139.** The one or more controllers **302** of the proportional control valve **310** may proactively determine an actuator **304** command or signal **312** to move the inner valve **306** opening of the proportional control valve **310** into a position that will deliver the desired mass flow rate based on the operating conditions of the fuel cell system **10/11.** The one or more controllers **302** of the proportional control valve **310** may transition to linear dynamics when the venturi or ejector **230** is operating with the primary nozzle **236** choked.

An important consideration when using a proportional control valve **310** as a control valve **256** of the fuel cell system **10/11** is ensuring accurate measurement of the single point pressure at the anode **204** and at a single point pressure at the cathode **208.** If the single point pressure at the anode **204** and at the single point pressure at the cathode **208** is not measured accurately, the pressure at the anode **204** and at the cathode **208** cannot be accurately controlled by one or more controllers **302** of the proportional control valve **310.** The single point pressures at anode **204** and cathode **208** may be absolute pressure or gauge pressure.

The downstream pressure ($P_2$), such as the primary nozzle inlet pressure ($P_O$), may be predicted based on compressible gas equations and/or configuration of the venturi or ejector **230**. The downstream pressure ($P_2$) may be predicted for choked nozzle conditions. In other embodiments, the downstream pressure ($P_2$) may be predicted for unchoked nozzle conditions.

The proportional control valve **310** may comprise a dual control loop **320**. The proportional control valve **310** may comprise an inner control loop **322** and an outer control loop **324**. The inner control loop **322** may use the pressure around the proportional control valve **310** to determine one or more signals **312** sent to the actuator **304** associated with proportional control valve **310**. In some embodiments, the inner control loop **322** may be an open loop method based on downstream pressure ($P_2$) estimated using a target fuel (e.g., $H_2$) flow rate. The inner control loop **322** may use a force balance and/or ISR compensation based on virtual estimates to generate the signal **312** that is sent to the actuator **304** associated with proportional control valve **310**.

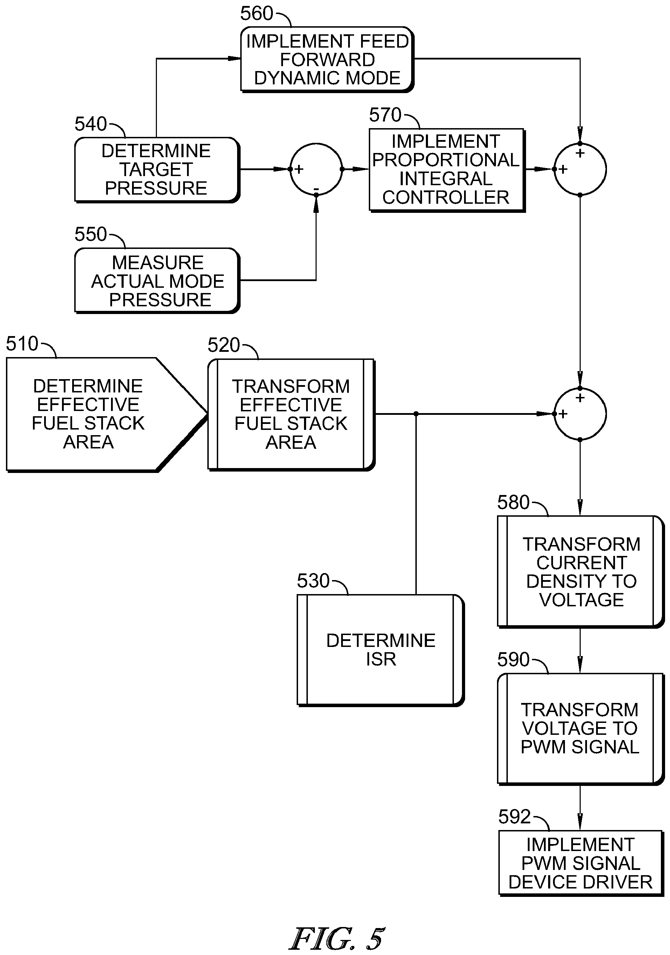

In one illustrative embodiment of the present operating method, as shown in **FIG. 5,** steps **540, 550, 560,** and **570** may comprise the outer control loop **324**. The target anode pressure (P) may be determined in step **540**. The actual anode pressure ($P_{AN\_MEASURED}$) may be measured in step **550**.

A feedforward dynamics model may be implemented in step **560**. The feedforward dynamics model may be in the form of a transfer function. The transfer function may be determined by utilizing classical system identification techniques. A proportional-integral controller **572** may be implemented in step **570**. The objective of this step is to correct for modeling any errors in the fuel cell system **10/11**.

In one illustrative embodiment, as shown in **FIG. 5,** steps **510, 520, 530, 580, 590,** and **592** may comprise the inner control loop **322**. Stack operating conditions, such as stack current, fuel supply pressure (Pcv), and/or fuel supply temperature (Tcv), may be used to determine an effective fuel cell stack area (Ac) in step **510**. In step **520,** a map is used to transform the effective stack area ($A_C$) to current density.

In some embodiments, the map is based on the data collected on an actual proportional control valve **310**. In other embodiments, the map could be in the form of a table with effective stack area ($A_C$) as an input, and the measured current density at a solenoid **317** of the proportional control valve **310** as the output. In some other embodiments, the map could be based on one or more regression equations. In one embodiment, the inverse sympathetic ratio (ISR) of the proportional control valve **310** may be determined in step **530**.

In one embodiment, current density to voltage transformation occurs in step **580**. The voltage needed to drive the required current density through the solenoid **317** of the proportional control valve **310** may be determined. In some embodiments, voltage is determined by utilizing electrical parameters of the solenoid **317,** such as solenoid resistance, leakage resistance, magnetizing inductance, solenoid current command, time derivative of valve displacement and/or time derivative of solenoid current. In other embodiments, the voltage needed to drive the required current density through a different mechanical component of the proportional control valve **310** (e.g., valve, coil etc.) and the electrical parameters of that mechanical component may be determined.

The voltage may be transformed to an electrical signal **312** that can be input to the proportional control valve **310**. In one illustrative embodiment, the voltage may be transformed to a pulse width modulated (PWM) signal **591** in step **590**. In some embodiments, the voltage to the pulse width modulated (PWM) signal **591** may be done by a scaling equation. In other embodiments, the voltage to a pulse width modulated (PWM) signal **591** may be calculated as follows.

$$\text{PWM Duty Cycle} = 100* \ (\text{Voltage/Max Supply Voltage}) \ (\text{percent}) \ \ (4)$$

A pulse width modulated (PWM) signal device driver **592** is implemented in step **594.** In some embodiments, the pulse width modulated (PWM) signal device driver **592** may be in the form of an electronic device. The pulse width modulated (PWM) signal device driver **592** may be a metal oxide semiconductor field effect transistor (MOSFET). The duty cycle of the pulse width modulated (PWM) signal device driver **592** may be adjusted to meet the percent pulse width modulated (PWM) signal duty cycle.

The proportional control valve **310** may compensate for the fuel supply temperature ($T_{CV}$). In some embodiments, the fuel supply temperature ($T_{CV}$) may be determined by a physical and/or virtual sensor **318** and may be based on information from the fuel supply system **80** (e.g., ambient conditions, etc.). In other embodiments, the fuel supply temperature ($T_{CV}$) may be determined from a fuel management system **210** in the fuel cell system **10/11.**

Temperature within the fuel cell system **10/11** comprising the fuel management system **210** may be representative of the fuel supply temperature ($T_{CV}$). The fuel supply temperature ($T_{CV}$) may be estimated from the temperature within the fuel cell system **10/11** comprising fuel management system **210**. The outer control loop **324** may apply correction using measured pressure via a pressure transmitter **319** that measures the anode inlet manifold pressure ($P_{AIM}$) (e.g., PT-1006). The pressure transmitter **319** may send one or more signals **312** to the one or more controller **302** associated with proportional control valve **310**.

The proportional control valve **310** may be designed to achieve substantial pressure recovery at the maximum primary flow rate of fuel (e.g., H$_2$) through the proportional control valve **310** (e.g., under choked conditions). The proportional control valve **310** may be designed to provide the maximum primary nozzle inlet pressure (P$_{O\_MAX}$) at a given usable H$_2$ storage tanks **82** (e.g., fuel tank) fraction. The proportional control valve **310** may be designed to provide the maximum usable H$_2$ storage tanks **82** (e.g., fuel tank) fraction at a given maximum primary nozzle inlet pressure (P$_{O\_MAX}$).

The flow rate through the proportional control valve **310** may decrease below the maximum primary flow rate, and substantial pressure recovery may not occur in the fuel cell system **10/11**. Lack of pressure recovery may impact the force balance on the proportional control valve **310**. The actuator **304** in the proportional control valve **310** may be configured to respond to any change in the force balance on the proportional control valve **310**.

Inaccurate pressure measurements at the anode **204** and the cathode **208** may result in error propagation. In one embodiment, the single point pressure sensors **205, 209** may be used at the anode inlet **212** and/or the cathode inlet **216** respectively. For example, if single point pressure sensors, such as the anode side pressure sensor **205** and the cathode side pressure sensor **209,** are used to measure the pressure at the anode inlet **212** (P1) and cathode inlet **216** (P2), the pressure differential ($\Delta$P) is determined as follows and further described in Table 1.

$$\Delta P = P1 - P2 \quad (5)$$

| Table 1 | | | | one sigma | | standard error (one sigma) | |
|---|---|---|---|---|---|---|---|
| P1 = | 2.50 | [bara] | $x_{p1} =$ | 1.0% | | 0.025 | [bara] |
| P2 = | 2.25 | [bara] | $x_{p2}=$ | 1.0% | | 0.023 | [bara] |
| $\Delta$P = | 0.10 | [bara] | $x_{\Delta p} =$ | 0.034 | [bara] | | |

As shown in **Table 1,** even if the single point pressure sensors **205, 209** are accurate, the standard error in each measurement may be +/- 0.1 bara. Furthermore, error propagation impacts the accurate measurement of $\Delta$P. The single point standard error is 0.034 bara. The uncertainty in $\Delta$P at 95% confidence is determined a follows.

$$\Delta P= 0.1 +/-1 \ 0.067 \ bar \quad (6)$$

In one embodiment, such error in measuring the single point pressures at the anode **204** (e.g., at the anode inlet **212)** and the cathode **208** (e.g., at the anode inlet **216),** and hence the error in accurately determining the pressure differential ($\Delta$P) between the anode **204** side and the cathode **208** side, could exist from the beginning of use of the fuel cell stack **12** comprising the anode **204** and the cathode **208**. In other embodiments, the error in measuring the single point pressures at the anode **204** (e.g., at the anode inlet **212)** and the cathode **208** (e.g., at the anode inlet **216)** may occur with sensor **205, 209** aging and/or drift over time.

A pressure differential sensor **211** that measures the pressure difference between the anode **204** and the cathode **208** may be used in addition to or instead of the single point pressure sensors at the anode **204** and the cathode **208**. The pressure differential sensor **211** may be designed to ensure that there is no crossover between the air **206** on the cathode **208** side and the anode inlet stream **222** (e.g., fuel, hydrogen) on the anode **204** side.

The design requirements of the single point pressure sensors **205, 209** at the anode **204** side and the cathode **208** side may allow for minimal standard error during each measurement of single point pressure. This may minimize error propagation when calculating the differential pressure ($\Delta$P). In some embodiments, the standard error may be required to be below a threshold, such as within about 0.5% to about 1% of the full scale, such that the error is reduced to below about 1.0 kPa to about 5 kPa. In other embodiments, the standard error may be less than about 25% of the target bias pressure (P$_{BIAS}$).

In one embodiment, the target differential pressure ($\Delta$P) may be changed to account for any error propagation. Altering the target pressure differential ($\Delta$P) may reduce the effect of any error in single point pressure measurements. However, altering the target pressure differential ($\Delta$P) may increase the stress on the fuel cell stack **12.**

In one embodiment, the minimum target bias pressure (P$_{BIAS\_MIN}$) required to minimize cross-over between the anode **204** and the cathode **208** may be determined after accounting for any uncertainty in sensing pressure and any uncertainty in a control system **330** comprising the one or more controllers **302** of the proportional control valve **310**.

In some embodiments, the target bias pressure ($P_{BIAS}$) and/or thresholds associated with standard errors may vary with operating condition. In some embodiments, the target bias pressure ($P_{BIAS}$) and/or thresholds associated with standard errors may be a function of gross current and/or current density **108** of the fuel cell system **10/11.**

For example, if the minimum target bias pressure ($P_{BIAS\_MIN}$) is about 10 kPa, the one or more controllers **302** of the proportional control valve **310** may target a bias pressure ($P_{BIAS}$) with a certain offset. In some embodiments, the offset may be calibrated based on a known uncertainty in the single point pressure sensors **205, 209** as follows.

$$P_{BIAS} = P_{BIAS\_MIN} + P_{OFFSET} \quad (7)$$

In one embodiment, if the minimum acceptable bias pressure is $P_{BIAS\_MIN}$, to account for the uncertainty, a nominal bias pressure may be defined as follows.

$$P_{BIAS\_NOM} = P_{BIAS\_MIN} + P_{OFFSET} \quad (8)$$

$$P_{BIAS\_SIGMA} = Z \times \sigma_{\_dP\_ERROR} \quad (9)$$

For 95% confidence, Z is equal to 2 and with $\sigma_{\_dP\_ERROR}$ is equal to 3.43 kPa

$$P_{OFFSET} = 6.8 \text{ kPa} \quad (10)$$

In one embodiment, the control system **330** comprising the one or more controllers 302 of the proportional control valve **310** may operate based on controls priority. There may be multiple threshold levels used to escalate controls priority from one level to the next. As the fuel cell system **10/11** gets closer to a certain predetermined threshold limit, the one or more controllers **302** of the proportional control valve **310** may escalate the response of the proportional control valve **310** or may change demand of the proportional control valve **310.** The minimum acceptable bias pressure ($P_{BIAS\_MIN}$) may be about 0.1 bara. The bias pressure margin ($P_{BIAS\_MARGIN}$) may be determined as follows.

$$P_{BIAS\_MARGIN} = P_{BIAS\_MEASURED} + P_{BIAS\_MIN} \quad (11)$$

If the bias pressure margin ($P_{BIAS\_MARGIN}$) is greater than a first threshold, then the one or more controllers **302** may respond according to a normal or a priority level one response. If the bias pressure margin ($P_{BIAS\_MARGIN}$) is greater than a second threshold, then the one or more controllers may respond according to an escalated or a priority level two response. If the bias pressure margin ($P_{BIAS\_MARGIN}$) is lower than the second threshold, then the one or more controllers may respond according to a further escalated or a priority level three response.

The first threshold may range from about 5 kPa to about 20 kPa, including any threshold or range of threshold comprised therein. The second threshold may be about 2.5 kPa to about 10 kPa, including any threshold or range of threshold comprised therein. The first threshold may be lower than 5 kPa or higher than 20 kPa, including any threshold or range of threshold comprised therein. The second threshold may lower than 2.5 kPa or greater than 10 kPa, including any threshold or range of threshold comprised therein.

A purge valve **340** may be configured to assist depressurization in the fuel cell system 10/11 under certain conditions. The purge valve **340** may be used only when required. For example, a purge valve **340** may be used in some embodiments only when the threshold of the fuel cell system **10/11** exceeds the predetermined system threshold.

The proportional control valve **310** may allow for short duration transients outside the steady state operating range of the fuel cell system **10/11.** The proportional control valve **310** may keep track of any time the fuel cell system **10/11** is not functioning in steady state. The proportional control valve **310** may limit deviation from steady state conditions. The fuel cell system **10/11** may use a virtual pressure model based on available volume, fuel consumption rate, temperature, and/or pressure when implementing the proportional control valve **310.** The virtual pressure model may be a simulation, computer modeling, remote data, or may be based on the operation of a separate system.

The single point pressure sensors **205, 209** at the anode **204** side and the cathode **208** side may be checked and compared to each other during operation of the fuel cell stack **12.** A correction may be introduced to the single point pressure sensor measurements if required. The correction may be determined by evaluating and/or comparing the single point pressure sensors **205, 209** relative to each other. When there is very low or minimal air **206** flow or anode inlet stream **222** flow during an idle state of the fuel cell stack **12,** an offset in the single point pressure sensor measurements may be calculated.

When there is very little or no air **206** flow or anode inlet stream **222** flow during an off state of the fuel cell stack **12,** an offset in the single point pressure sensor measurements may be calculated. If the calculated offset is higher than a flow threshold, a correction may be introduced to the single point pressure sensor measurements. The correction may be introduced to the proportional control valve **310**. The flow threshold for introducing the correction may be set to when the offset is greater than about 1% of the measured value.

A disturbance may be introduced when using a proportional control valve **310**. If anode inlet stream **222** flow is increased, the anode **204** side pressure may be increased in proportion to the increase in anode inlet stream **222** flow by calibrating the single point pressure sensor **205** on the anode **204** side. The proportional increase in the anode **204** side pressure may depend on size of anode **204** side of the fuel cell stack **12**. The proportional increase in the anode **204** side pressure may be determined by calibrating the single point pressure sensor **205** at the anode **204** side to an expected response based on the operating conditions of the fuel cell stack **12**. For example, the slope of the sensor response reflecting the sensor sensitivity may be updated based on the operating conditions of the fuel cell stack **12.**

Initial off-line calibration of the single point pressure sensors **205, 209** on the anode **204** side and the cathode **208** side may be undertaken. The initial off-line calibration of the single point pressure sensors **205, 209** on the anode **204** side and the cathode **208** side may be barcoded into the one or more controllers **302** of the proportional control valve **310**. The initial off-line calibration of the single point pressure sensors **205, 209** on the anode **204** side and the cathode **208** side may be communicated to the one or more controllers **302** of the proportional control valve **310** in other ways.

During a break-in period, service tools may collect calibration information and/or communicate the information to the one or more controller **302**. The calibration information may also be retained by the one or more controller **302** as part of the calibration. Service tools may maintain service records for a fixed period of time.

If telematic communication devices **390** are available, data may be recorded and sent to a database where the data is analyzed. The analyzed date may be sent back to the one or more controllers **302** to update calibration. The calibration values may be checked and/or updated under one or more operating conditions.

The single point pressure sensor calibrations may be updated if single point pressure sensor measurements change over a period of time. Periodic updates may be conducted after a diagnostic analysis have been performed and sufficient time has been allowed to collect information. The sufficient time in between updates may be hours, days, or weeks. In other embodiments, the sufficient time to collect information may be hours, days, or weeks. In some other embodiments, a long term average may be maintained, where the information may be saved in the one or more controllers before any powering down or power outage occurs. In some embodiments, the information may be transferred to a memory location when the information is retained during the powering down.

In one embodiment, the single point pressure sensors **205, 209** may be located either at the anode inlet **212** or at the anode outlet **214**. In one embodiment, the single point pressure sensors may be located either at the cathode inlet **216** or at the cathode outlet **218**. In one embodiment the single point pressure sensors **205, 209** may be located at the anode inlet **212** and the cathode inlet **216**. In other embodiments, the single point pressure sensors **205, 209** maybe located at the anode inlet **212** and the cathode outlet **218**. In some embodiments, the single point pressure sensors **205, 209** maybe located at the anode outlet **214** and the cathode inlet **216**. In some further embodiments, the single point pressure sensors **205, 209** maybe located at the anode outlet **214** and the cathode outlet **218**. The various locations of the pressure sensors **205, 209** result in different advantages and disadvantages.

In one embodiment, a representative bias pressure measurement may needed. The representative bias pressure measurement may be a measurement that represents the stresses the fuel cell or fuel cell stack **12** membrane **22** will experience. It may be a gas diffusion process that is a driving force.

The selection of the locations of the pressure sensors **205, 209** may depend on the configuration of the cathode **208** and anode **204** flows. The outlet pressures of the respective streams (e.g., cathode **208** and anode **204** flows) represent the lowest pressure of either stream. In some embodiments, the cathode **208** and anode **204** flows may be in a cross flow configuration, and the pressure difference between cathode inlet **216** and anode outlet **214** pressures and anode inlet **212** and cathode outlet **218** pressures may be the maximum pressure difference.

In other embodiments, the cathode and anode flows may be in a co-current configuration. Space availability in the anode **204** and/ or cathode **208** may also determine the location of the sensors. In one preferred embodiment, more than one single point pressure sensors **205, 209** at the anode **204** and/or more than one single point pressure sensor at the cathode **208** may be used.

The one or more controllers **302** of the proportional control valve **310** may be present inside or outside the proportional control valve **330**. The one or more controllers **302** of the proportional control valve **310** may communicate with fuel management system **210** of the fuel cell stack **12** power module. The one or more controllers **302** may communicate with other components of the fuel cell system **10/11,** including but not limited to one or more actuators **304** on the proportional control valve **310,** the fuel cell stack **210,** the recirculation pump **220,** the exhaust valves **280** and **270,** the pressure transfer valve **290,** the pressure transducer **240,** and the venturi or an ejector **230.** The data or information obtained by the one or more controllers of the proportional control valve **310** may aid in the functioning of the proportional control valve **310**. The information obtained by the one or more controllers **302** of the proportional control valve **310** may be based on the operating conditions of the fuel cell stack **12.**

The one or more controllers **302** of the proportional control valve **310** in the fuel cell system **10/11** may communicate with the components of the fuel cell system **10/11** using one or more communication technologies (e.g., wired, wireless and/or power line communications) and associated protocols (e.g., Ethernet, InfiniBand®, Bluetooth®, Wi-Fi®, WiMAX, 3G, 4G LTE, 5G, etc.). The one or more controllers **302** of the proportional control valve **310** in the fuel cell system **10/11** may communicate with the components of the fuel cell system **10/11** in real time or automatically. In other embodiment, the one or more controllers **302** of the proportional control valve **310** in the fuel cell system **10/11** may communicate with the components of the fuel cell system **10/11** after manual operation by a user.

The following described aspects of the present invention are contemplated and nonlimiting.

A first aspect of the present invention relates to a fuel cell stack system includes a fuel cell stack and a proportional control valve. The fuel cell stack includes an anode with an anode inlet and an anode outlet and a cathode with a cathode inlet and a cathode outlet. The proportional control valve controls the flow of a fuel into the anode based on a pressure differential measured across any two of the anode inlet, the anode outlet, the cathode inlet, and the cathode outlet.

A second aspect of the present invention relates to a method of implementing and/or controlling a proportional control valve in a fuel cell or fuel cell stack includes the steps of measuring a pressure differential across any two of an anode inlet, and anode outlet, a cathode inlet, and a cathode outlet of the fuel cell or fuel cell stack, flowing a fuel through the proportional control valve based on the pressure differential, and controlling the proportional control valve operation by one or more controllers. An anode includes the anode inlet and the anode outlet. A cathode includes the cathode inlet and the cathode outlet. The step of measuring the pressure differential includes using a first single point pressure sensor at the anode inlet or the anode outlet and a second single point pressure sensor at the cathode inlet or the cathode outlet.

In the first aspect of the present invention, the pressure differential may be measured by a first single point pressure sensor positioned at the anode inlet or the anode outlet and a second single point pressure sensor positioned at the cathode inlet or the cathode outlet.

In the first aspect of the present invention, measurements made by the first single point pressure sensor at the anode inlet or anode outlet and the second single point pressure sensor at the cathode inlet or cathode outlet may have a combined standard error of less than about 25% of a target bias pressure. The target bias pressure may be based on operating conditions of the fuel cell stack.

In the first aspect of the present invention, the first single point pressure sensor at the anode inlet or anode outlet and the second single point pressure sensor at the cathode inlet or cathode outlet may be subject to a calibration. The calibration may be communicated to a controller of the proportional control valve.

In the first aspect of the present invention, a controller of the proportional control valve may target a bias pressure with an offset. The offset may be calibrated based on a known uncertainty in measurements made by the first and second single point pressure sensors, and on a minimum target bias pressure. The controller of the proportional control valve may include an inner control loop and an outer control loop. The inner control loop may use a force balance or inverse sympathetic ratio (ISR) compensation method. The inner control loop may be an open loop based on pressure downstream of the proportional control valve and may be estimated using a target flow rate. The inner control loop may compensate for a fuel supply temperature measurement by using a physical or virtual sensor.

In the first aspect of the present invention, the first pressure differential may be measured by a pressure differential sensor across the anode and the cathode.

In the first aspect of the present invention, the proportional control valve may be configured to operate in combination with an ejector. The proportional control valve may include at least one controller that corrects for non-linear dynamics when a primary nozzle of the ejector is choked or not choked.

In the second aspect of the present invention, the method may further include calibrating offline the first single point pressure sensor at the anode inlet or the anode outlet and the second single point pressure sensor at the cathode inlet or the cathode outlet to determine a calibration value and communicating the calibration value to the one or more controllers of the proportional control valve. The method may further include updating the calibration value to determine an updated calibration value and communicating the updated calibration value to one or more controllers of the proportional control valve.

In the second aspect of the present invention, the method may further include introducing a disturbance using the proportional control valve based on operating condition of the fuel cell or fuel cell stack.

In the second aspect of the present invention, the method may further include evaluating the first single point pressure sensor and the second single point pressure sensor relative to each other and introducing a correction into the proportional control valve if required.

In the second aspect of the present invention, measuring the first pressure differential may include using a pressure differential sensor determining the pressure differential measured across the anode and the cathode.

In the second aspect of the present invention, the first and second single point pressure sensors may have a combined standard error less than about 25% of a target bias pressure.

In the second aspect of the present invention, the method may further include identifying a target pressure difference based on operating conditions of the fuel cell or fuel cell stack.

In the second aspect of the present invention, controlling the proportional control valve may further include implementing an inner control loop. The inner control loop may be an open loop based on pressure downstream of the proportional control valve. The method may further including implementing the inner control loop by estimating a target fuel flow rate. The inner control loop may use a force balance or inverse sympathetic ratio (ISR) compensation method. The inner control loop may compensate for a fuel supply temperature measurement by using a physical or virtual sensor.

In the second aspect of the present invention, the control valve may be configured to operate in combination with an ejector. The method may further include correcting for non-linear dynamics when a primary nozzle of the ejector is choked or not choked. Correcting for non-linear dynamics may be implemented by the one or more controllers.

In the second aspect of the present invention, the method may further include the one or more controllers of the proportional control valve targeting a bias pressure with an offset. The offset may be calibrated based on a known uncertainty of the first and second single point pressure sensors and on a minimum target bias pressure.

The features illustrated or described in connection with one exemplary embodiment or aspect may be combined with any other feature or element of any other embodiment or aspect described herein. Such modifications and variations are intended to be included within the scope of the present disclosure. Further, a person skilled in the art will recognize that terms commonly known to those skilled in the art may be used interchangeably herein.

The above embodiments and aspects are described in sufficient detail to enable those skilled in the art to practice what is claimed and it is to be understood that other embodiments may be utilized and that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated.

Furthermore, references to "one embodiment" of the presently described subject matter are not intended to be interpreted as excluding the existence of additional embodiments that also incorporate the recited features. Specified numerical ranges of units, measurements, and/or values include, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first", "second", "third", and the like, as used herein do not denote any order or importance, but rather are used to distinguish one element from another. The term "or" and "and/or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising", "including", or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps. The phrase "consisting of' or "consists of' refers to a compound, composition, formulation, or method that excludes the presence of any additional elements, components, or method steps.

The term "consisting of' also refers to a compound, composition, formulation, or method of the present disclosure that excludes the presence of any additional elements, components, or method steps. The phrase "consisting essentially of' or "consists essentially of' refers to a composition, compound, formulation, or method that is inclusive of additional elements, components, or method steps that do not materially affect the characteristic(s) of the composition, compound, formulation, or method. The phrase "consisting essentially of' also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about", and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

**Claims**

1. A fuel cell stack system, comprising:

   a fuel cell stack including:

      an anode with an anode inlet and an anode outlet, and
      a cathode with a cathode inlet and a cathode outlet, and

   a proportional control valve controlling the flow of a fuel into the anode based on a pressure differential measured across any two of the anode inlet, the anode outlet, the cathode inlet, and the cathode outlet.

2. The fuel cell stack system of claim 1, wherein the pressure differential is measured by a first single point pressure sensor positioned at the anode inlet or the anode outlet and a second single point pressure sensor positioned at the cathode inlet or the cathode outlet.

3. The fuel cell stack system of claim 1, wherein the first pressure differential is measured by a pressure differential sensor across the anode and the cathode.

4. The fuel cell stack system of any of claims 1 to 3, wherein the proportional control valve is configured to operate in combination with an ejector, and wherein the proportional control valve comprises at least one controller that corrects for non-linear dynamics when a primary nozzle of the ejector is choked or not choked.

5. The fuel cell stack system of claim 2 or claim 4 when dependent on claim 2, wherein measurements made by the first single point pressure sensor at the anode inlet or anode outlet and the second single point pressure sensor at the cathode inlet or cathode outlet have a combined standard error of less than about 25% of a target bias pressure, wherein the target bias pressure is based on operating conditions of the fuel cell stack.

6. The fuel cell stack system of claim 2 or claims 4 or 5 when dependent on claim 2, wherein the first single point pressure sensor at the anode inlet or anode outlet and the second single point pressure sensor at the cathode inlet or cathode outlet are subject to a calibration, and wherein the calibration is communicated to a controller of the proportional control valve.

7. The fuel cell stack system of claim 2 or claims 4 to 6 when dependent on claim 2, wherein a controller of the proportional control valve targets a bias pressure with an offset, and wherein the offset is calibrated based on a known uncertainty in measurements made by the first and second single point pressure sensors, and on a minimum target bias pressure.

8. The fuel cell stack system of claim 7, wherein the controller of the proportional control valve comprises an inner control loop and an outer control loop, and wherein the inner control loop uses a force balance or inverse sympathetic ratio (ISR) compensation method.

9. A method of implementing and/or controlling a proportional control valve in a fuel cell or fuel cell stack, comprising:

measuring a pressure differential across any two of an anode inlet, an anode outlet, a cathode inlet, and a cathode outlet of the fuel cell or fuel cell stack,
flowing a fuel through the proportional control valve based on the pressure differential, and
controlling the proportional control valve operation by one or more controllers,
wherein an anode includes the anode inlet and the anode outlet, and a cathode includes the cathode inlet and the cathode outlet, and
wherein measuring the pressure differential comprises using a first single point pressure sensor at the anode inlet or the anode outlet and a second single point pressure sensor at the cathode inlet or the cathode outlet.

10. The method of claim 9, wherein the first and second single point pressure sensors have a combined standard errors less than about 25% of a target bias pressure.

11. The method of claim 9 or 10, wherein the method further comprises calibrating offline the first single point pressure sensor at the anode inlet or the anode outlet and the second single point pressure sensor at the cathode inlet or the cathode outlet to determine a calibration value and communicating the calibration value to the one or more controllers of the proportional control valve.

12. The method of claim 9, 10, or 11, wherein the method further comprises introducing a disturbance using the proportional control valve based on operating condition of the fuel cell or fuel cell stack.

13. The method of any of claims 9 to 12, wherein the method further comprises evaluating the first single point pressure sensor and the second single point pressure sensor relative to each other and introducing a correction into the proportional control valve if required.

14. The method any of claims 9 to 13, wherein controlling the proportional control valve further comprises implementing an inner control loop, and wherein the inner control loop is an open loop based on pressure downstream of the proportional control valve, and wherein the method further comprises implementing the inner control loop by estimating a target fuel flow rate.

15. The method claim 14, wherein the inner control loop compensates for a fuel supply temperature measurement by using a physical or virtual sensor.

*FIG. 1A*

EP 4 109 607 A2

FIG. 1C

FIG. 1B

FIG. 2

FIG. 3

FIG. 4

EP 4 109 607 A2

560 — IMPLEMENT FEED FORWARD DYNAMIC MODE

540 — DETERMINE TARGET PRESSURE

550 — MEASURE ACTUAL MODE PRESSURE

570 — IMPLEMENT PROPORTIONAL INTEGRAL CONTROLLER

510 — DETERMINE EFFECTIVE FUEL STACK AREA

520 — TRANSFORM EFFECTIVE FUEL STACK AREA

530 — DETERMINE ISR

580 — TRANSFORM CURRENT DENSITY TO VOLTAGE

590 — TRANSFORM VOLTAGE TO PWM SIGNAL

592 — IMPLEMENT PWM SIGNAL DEVICE DRIVER

*FIG. 5*

**EP 4 109 607 A2**

**Patent documents cited in the description**

- US 63215072